# EUROPÄISCHE PATENTANMELDUNG

(11) **EP 4 008 913 A1**
(43) Veröffentlichungstag der Anmeldung: **08.06.2022**
(21) Anmeldenummer: 20211234.8
(22) Anmeldetag: 02.12.2020
(51) Int. Cl.: F16B 2/12, F16L 3/10, F16L 3/227, F16L 3/237, H02G 3/32

(54) **VORRICHTUNG ZUR BEFESTIGUNG VON KABELN, ROHREN ODER SCHLÄUCHEN**

(71) Anmelder: WALTER STAUFFENBERG GMBH & CO. KG, 58791 Werdohl (DE)
(72) Erfinder: KÖNIG, Ulrich Stefan, 58849 Herscheid (DE); SCHULZ, Matthäus, 57439 Attendorn (DE); EPP, Elena, 58849 Herscheid (DE)
(74) Vertreter: Patentanwälte Dörner & Kötter PartG mbB

(57) **Zusammenfassung**

Die Erfindung betrifft eine Vorrichtung zur Befestigung von Leitungen, insbesondere Stromkabeln, Rohren oder Schläuchen, umfassend ein Gehäuse (1), in dem parallel zueinander zwei Klemmbacken (2) angeordnet sind, deren Klemmflächen im montierten Zustand eine Durchführung bilden, wobei wenigstens eine erste der beiden Klemmbacken (2) in dem Gehäuse (1) verschiebbar in Richtung der gegenüberliegenden Klemmbacke (2) gelagert ist und wobei in dem Gehäuse (1) ein Spannteil (3) angeordnet ist, das zumindest bereichsweise wenigstens einen Gewindegang (32) aufweist, mit dem es in ein Innengewinde des Gehäuses (1) einbringbar und gegen eine Klemmbacke (2) verspannbar ist.

## Beschreibung

Die Erfindung betrifft eine Vorrichtung zur Befestigung von Leitungen, insbesondere Stromkabeln, Rohren oder Schläuchen nach dem Patentanspruch 1.

Zur Befestigung von Kabeln, Rohren und Schläuchen werden regelmäßig sogenannte Schellen eingesetzt, die einen Schellenkörper umfassen, der aus einem thermoplastischen oder elastomeren Kunststoff oder auch aus Metall hergestellt ist. Der Schellenkörper ist dabei häufig aus zwei miteinander verbindbaren Befestigungsteilen gebildet, die im montierten Zustand eine Durchführung zur Aufnahme der zur befestigenden Leitung bilden. Eine derartige Vorrichtung ist beispielsweise in der WO 2015/177181A beschrieben. Derartige Schellen haben sich in der Praxis bewährt. Dabei hat sich in der Praxis jedoch gezeigt, dass für unterschiedliche Leitungsquerschnitte verschiedene Größen von Schellen vorzuhalten sind. Zudem ist eine schnelle, provisorische Festlegung einer Leitung mit den vorbekannten Schellen nur bedingt möglich.

Hier will die Erfindung Abhilfe schaffen. Der Erfindung liegt die Aufgabe zugrunde, eine Vorrichtung zur Befestigung von Leitungen, insbesondere Stromkabeln, Rohren oder Schläuchen bereitzustellen, die für unterschiedliche Leitungsquerschnitte einsetzbar ist und die eine schnelle provisorische Festlegung einer Leitung ermöglicht. Gemäß der Erfindung wird diese Aufgabe durch die Merkmale des Patentanspruchs 1 gelöst.

Mit der Erfindung ist eine Vorrichtung zur Befestigung von Leitungen, insbesondere Stromkabeln, Rohren oder Schläuchen bereitgestellt, die für unterschiedliche Leitungsquerschnitte einsetzbar ist und die eine schnelle provisorische Festlegung einer Leitung ermöglicht. Dadurch, dass in dem Gehäuse zwei Klemmbacken angeordnet sind, deren Klemmflächen im montierten Zustand eine Durchführung bilden, wobei wenigstens eine erste der beiden Klemmbacken in dem Gehäuse verschiebbar in Richtung der gegenüberliegenden Klemmbacke gelagert ist, ist eine sehr zügige Festlegung einer aufgenommenen Leitung ermöglicht. Durch das in dem Gehäuse angeordnete Spannteil, das zumindest bereichsweise wenigstens ein Gewindegang aufweist, mit dem es in ein Innengewinde des Gehäuses einbringbar und gegen eine Klemmbacke verspannbar ist, ist eine einfache und schnelle Fixierung der festgelegten Leitung ermöglicht.

In Weiterbildung der Erfindung umfasst das Gehäuse zwei Seitenteile, die mit Führungsnuten versehen sind, in denen die wenigstens eine verschiebbare Klemmbacke geführt ist. Hierdurch ist eine zügige, lagegerichtete Positionierung der Klemmbacke gewährleistet. Bevorzugt ist das Innengewinde durch in die beiden Seitenteile an ihren zueinander gerichteten Innenseiten eingebrachte Gewindegänge gebildet.

In Ausgestaltung der Erfindung weist das Spannteil gegenüberliegend jeweils einen Gewindegang, bevorzugt jeweils genau einen Gewindegang zum Eingriff in einen Gewindegang eines Seitenteils auf, wobei die beiden Gewindegänge derart beabstandet zueinander angeordnet sind, dass sie in wenigstens einer Drehposition des Spannteils mit den Gewindegängen der beiden gegenüberliegenden Seitenteile außer Eingriff sind. Hierdurch ist eine schnelle axiale Positionierung des Spannteils an die verschiebbare Klemmbacke durch einfaches Andrücken ermöglicht. Durch anschließende Drehung des Spannteils ist dieses in der bestehenden Position fixierbar, wobei die Gewindegänge des Spannteils mit den Gewindegängen der Seitenteile in Eingriff gebracht werden. Durch die Steigung der Gewindegänge der Seitenteile ist mit zunehmender Drehung des Spannteils eine Verspannung des Klemmteils in Richtung des gegenüberliegenden Klemmteils erzielt.

In weiterer Ausgestaltung der Erfindung sind an das Spannteil in Umfangsrichtung zwischen dessen beiden Gewindegängen gegenüberliegend Federlaschen angeformt, die jeweils einen Gewindegang zum Eingriff in einen Gewindegang eines Seitenteils aufweisen. Diese Federlaschen können bei axialem Verschieben des Spannteils in dem Gehäuse zurückweichen, wodurch die axiale Bewegung des Spannteils nicht behindert wird. Zugleich greifen die an den Federlaschen angeformten Gewindegänge bei Erreichen der gewünschten Position des Spannteils jeweils in einen Gewindegang eines Seitenteils ein, wodurch eine geführte Drehung des Spannteils unterstützt wird, bis dessen Gewindegänge in die Gewindegänge der beiden Seitenteile eingreifen.

In Weiterbildung der Erfindung ist in den Seitenteilen ein erstes Innengewinde angeordnet, das eine große Steigung aufweist, wobei in beiden Seitenteilen zwischen den ersten Gewindegängen des ersten Innengewindes zweite Gewindegänge gleicher Steigung angeordnet sind, die sich zu einem zweiten Innengewinde ergänzen. Mit zunehmender Steigung eines Gewindes vergrößert sich der Abstand der Gewindegänge, wodurch das axiale Spiel des eingreifenden Gewindegangs des Spannteils vergrößert wäre. Durch die Anordnung zweiter Gewindegänge zwischen den ersten Gewindegängen, die sich zu einem zweiten Innengewinde ergänzen, ist ein spielfreier Eingriff der beiden Gewindegänge des Spannteils bei gleichzeitig großer Steigung des Innengewindes ermöglicht. Zudem ist eine sehr feine Rasterung der angeordneten Gewindegänge der Seitenteile erzielt, wodurch eine Feinjustierung des Spannteils ermöglicht ist. Je nach Positionierung des Spannteils durch axiale Verschiebung innerhalb des Gehäuses mit über die Gewindegänge gleitenden Federlaschen greifen bei Drehung des Spannteils dessen Gewindegänge in Gewindegänge des ersten oder des zweiten Innengewindes der Seitenteile ein.

In Weiterbildung der Erfindung ist die den Spannteil abgewandte zweite Klemmbacke ortsfest in dem Gehäuse gehalten. Hierdurch ist eine Schnellfixierung einer aufgenommenen Leitung vereinfacht.

In Ausgestaltung der Erfindung sind an die zweite Klemmbacke an ihrer dem Gehäuseboden zugewandten Unterseite mehrere orthogonal an diesen angestellte Federlaschen angeformt, die an ihrem freien Ende eine nach außen gerichtete Rastnase aufweisen und durch die ein ringförmiger Rastkragen gebildet ist, der in eine in dem Gehäuseboden hierfür eingebrachte Bohrung einrastbar ist. Hierdurch ist eine schnelle Bestückung des Gehäuses mit einer geeigneten Klemmbacke ermöglicht, die sodann ortsfest sowie lösbar mit dem Gehäuse verbunden ist. Je nach Einsatzzweck kann die Vorrichtung so mit den erforderlichen Klemmbacken bestückt werden.

In Weiterbildung der Erfindung weist das Spannteil einen Eingriff zum manuellen Verdrehen des Spannteils im Gehäuse auf. Hierdurch ist die Handhabung des Spannteils vereinfacht.

In Ausgestaltung der Erfindung ist das Spannteil über ein flexibles Sicherungsteil an dem Gehäuse verliersicher gehalten. Bevorzugt ist das flexible Sicherungsteil durch ein mit dem Gehäuse verbundenes Band, insbesondere eine Kugelkette verbunden.

In weiterer Ausgestaltung der Erfindung sind die Klemmbacken jeweils mit mindestens zwei parallel zueinander angeordneten Dämpfungselementen versehen, die sich in Längsrichtung der Durchführung erstrecken und die an die Klemmbacken angeformt sind. Hierdurch ist eine gute Dämpfungswirkung bei gleichzeitiger Vermeidung von Leitungseinschnürungen erzielt. Alternativ können die Dämpfungselemente auch Bestandteil eines in die Klemmbacke eingelegten Dämpfungskörpers sein, der insbesondere halbschalenförmig ausgebildet sein kann. Bevorzugt sind die Dämpfungselemente aus derart weichelastischem Material gebildet, dass sich ein dichtender Konturabschluss zu einem aufgenommenen Rohr ergibt. Hierdurch ist ein Schutz vor Korrosion bspw. durch eindringendes Salzwasser bewirkt.

In Weiterbildung der Erfindung weist die erste Klemmbacke vier in Richtung des Spannteils sich erstreckende Vorsprünge auf, wobei das Spannteil eine zylinderförmige Außenmantelfläche aufweist, an der die Vorsprünge im montierten Zustand der Vorrichtung anliegen. Hierdurch ist eine geführte Anlage des Spannteils an die erste Klemmbacke gewährleistet, wodurch möglichen Verklemmungen entgegengewirkt ist.

In weiterer Ausgestaltung der Erfindung sind die Klemmbacken identisch ausgebildet. Hierdurch ist eine Minimierung der Herstellungskosten, verbunden mit einer minimierten Vorratshaltung erzielt.

In Ausgestaltung der Erfindung sind an das Gehäuse nach außen sich erstreckende Befestigungslaschen angeformt, die jeweils einen Durchbruch zur Durchführung einer Befestigungsschraube aufweisen. Hierdurch ist eine einfache Befestigung der Vorrichtung an einem Tragteil ermöglicht. Durch den Durchbruch, der vorzugsweise in Art eines Langlochs ausgebildet ist, ist eine Nachjustierung der Position der Vorrichtung an dem Tragteil ermöglicht. Dabei sind die Durchbrüche der angeordneten Befestigungslaschen vorzugsweise unterschiedlich ausgerichtet, wodurch eine Justierung in unterschiedliche Richtungen ermöglicht ist.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die schematische Darstellung einer Vorrichtung zur Befestigung von Leitungen a) in einer räumlichen Darstellung; b) in einer Ansicht von vorne; c) in Explosionsdarstellung;

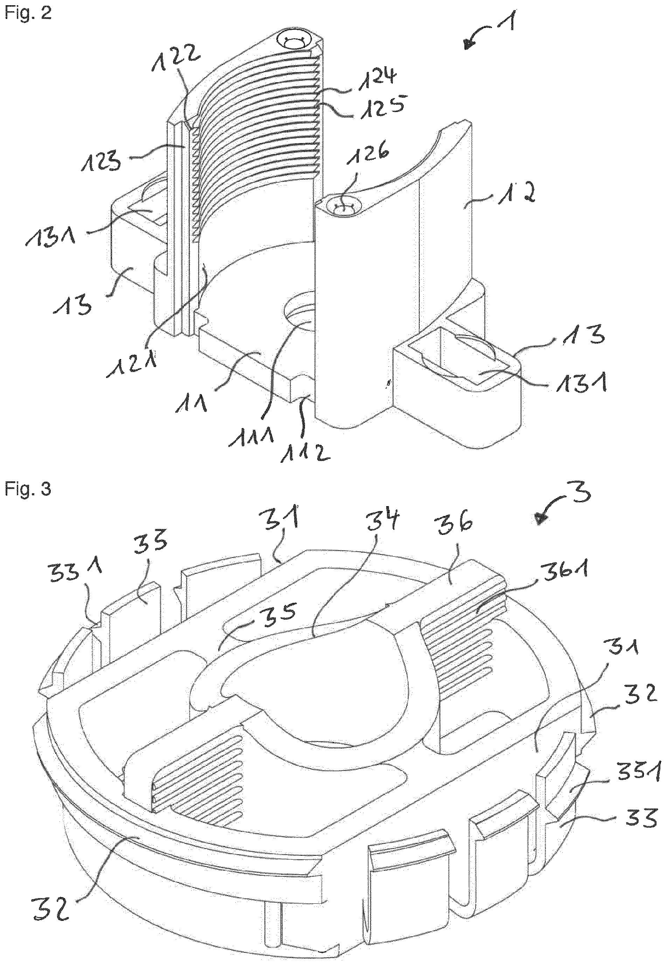

- Figur 2: die räumliche Darstellung des Gehäuses der Vorrichtung aus Figur 1;
- Figur 3: die räumliche Darstellung des Spannteils der Vorrichtung aus Figur 1;

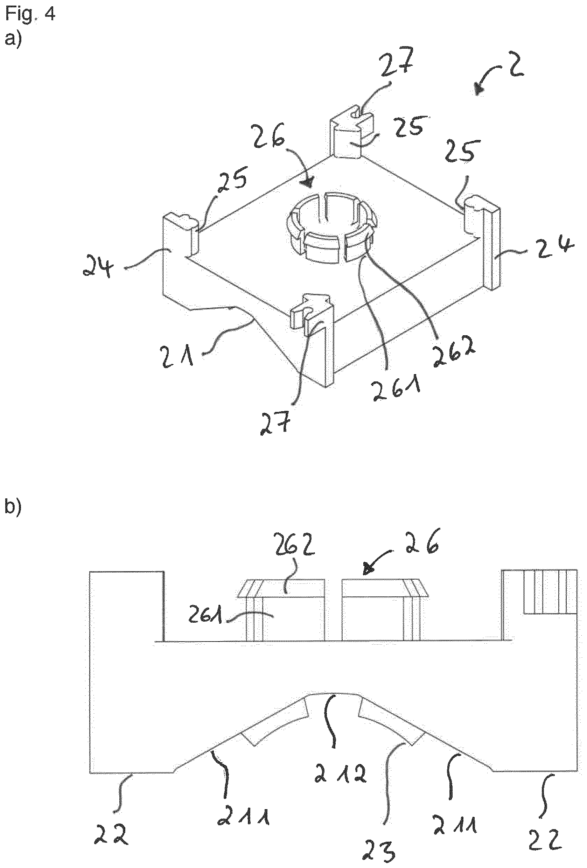

- Figur 4: die schematische Darstellung der Klemmbacke der Vorrichtung aus Figur 1 a) in räumlicher Darstellung; b) in der Ansicht von vorne;
- Figur 5: die räumliche Darstellung einer Vorrichtung zur Befestigung von Leitungen in einer zweiten Ausführungsform;
- Figur 6: die räumliche Darstellung einer Vorrichtung zur Befestigung von Leitungen in einer dritten Ausführungsform.

Die als Ausführungsbeispiel gewählte Vorrichtung zur Befestigung von Stromkabeln, Rohren oder Schläuchen besteht im Wesentlichen aus einem Gehäuse 1, das zwei identisch ausgebildete Klemmbacken 2 aufnimmt, sowie ein Spannteil 3, das über eine Kugelkette 4 mit dem Gehäuse 1 verbunden ist.

Das Gehäuse 1 umfasst einen Gehäuseboden 11, an den gegenüberliegend zwei Seitenteile 12 angeordnet sind, an die jeweils eine Befestigungslasche 13 angeformt ist. Der Gehäuseboden 11 ist im Wesentlichen in Art einer ebenen Platte ausgebildet und weist mittig eine Bohrung 111 auf, die in Art einer Stufenbohrung ausgeführt ist. Jeweils angrenzend an die Seitenteile 12 sind in den Gehäuseboden 11 beabstandet zueinander vier Ausnehmungen 112 eingebracht.

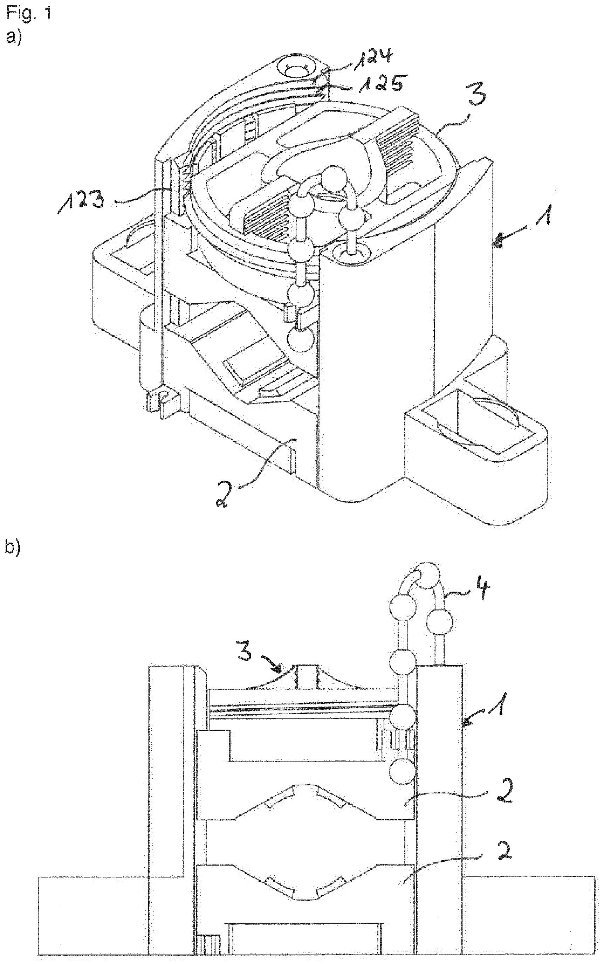

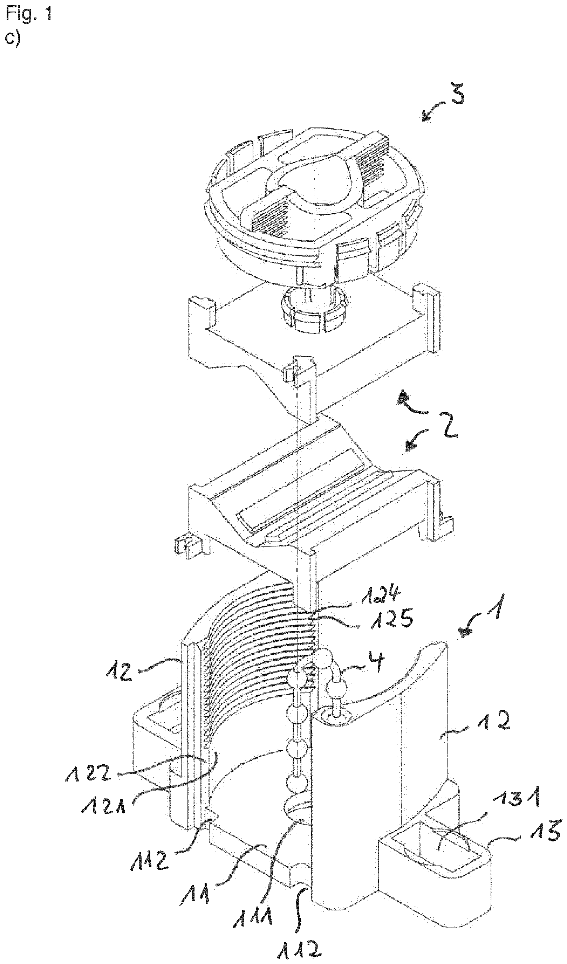

Die Seitenteile 12 erstrecken sich orthogonal zum Gehäuseboden 11 und weisen an ihrer dem jeweils anderen Seitenteil 12 zugewandten Seite eine zylinderabschnittförmige Einformung 121 auf, die beidseitig in einen Längssteg 122 mündet, der jeweils eine Führungsnut 123 begrenzt. In den Einformungen 121 sind jeweils abwechselnd erste Gewindegänge 124 und zweite Gewindegänge 125 eingebracht. Die ersten Gewindegänge 124 der beiden Seitenteile 12 bilden ein erstes Innengewinde und die zweiten Gewinde 125 der beiden Seitenteile 12 bilden ein zweites Innengewinde aus. Stirnseitig ist in jedes Seitenteil 12 eine Bohrung 126 eingebracht, wobei die beiden Bohrungen 126 der beiden Seitenteile 12 diagonal zueinander positioniert sind. Von einer Bohrung 126 eines Seitenteils 12 ist eine endseitige Kugel einer Kugelkette 4 aufgenommen, die an ihrem gegenüberliegenden Ende mit dem Spannteil 3 verbunden ist. Dabei kann die endseitige Kugel entweder - wie in Figur 1 dargestellt - durch Einpressen in die Bohrung 126 befestigt sein. Alternativ kann die Bohrung auch mit einer eine Engstelle aufweisenden Rasteinrichtung versehen sein, in der ein Verbindungsglied zwischen zwei Kugeln der Kugelkette einrastbar ist.

Die Befestigungslaschen 13 sind weitgehend quaderförmig ausgebildet und mit einem quaderförmigen Durchbruch 131 versehen. Dabei ist eine Befestigungslasche 13 mit ihrer schmalen Querseite an ein erstes Seitenteil 12 angestellt und die zweite Befestigungslasche 13 ist mit ihrer breiten Längsseite an das zweite Seitenteil 12 angestellt. In den Figuren weisen die Befestigungslaschen 13 eine in Bezug auf die Höhe der Seitenteile 12 geringe Höhe auf. Je nach Anforderung kann diese Höhe unterschiedlich gewählt sein - bis hin zu einer den Seitenteilen 13 entsprechenden Höhe, wodurch unerwünschte, auf die Seitenteile einwirkende Biegemomente beim Anziehen einer durch die Befestigungslaschen 13 geführten Schraube vermieden sind. Im Ausführungsbeispiel ist das Gehäuse 1 als Kunststoffspritzgussteil hergestellt.

Die Klemmbacken 2 sind im Wesentlichen quaderförmig ausgebildet und weisen mittig eine sich entlang einer Mittelachse erstreckende Einwölbung 21 auf, die an ihren beiden Längsseiten von Anlageflächen 22 begrenzt ist. Die Einwölbung 21 umfasst zwei winklig zueinander angestellte Flanken 211, die sich zwischen einer streifenartigen Mittelfläche 212 einerseits und den beiden Anlageflächen 22 andererseits erstrecken. Die Flanken 211 sind jeweils mit einem im Wesentlichen quaderförmigen, sich in Längsrichtung der Einwölbung 21 erstreckenden Dämpfungselement 23 versehen, deren nach außen gerichtete Oberfläche zur Anlage an einer aufgenommenen Leitung konkav ausgebildet sind. Die Dämpfungselemente 23 sind im Ausführungsbeispiel einstückig an die Klemmbacke 2 angeformt.

An ihren Eckseiten ist an die Klemmbacke 2 jeweils ein Führungsarm 24 angeformt, der an ihrer dem Dämpfungselement 23 gegenüberliegenden Seite über die Klemmbacke 2 hervorsteht. An den Führungsarmen 24 sind Vorsprünge 25 angeformt, die sich zur Mitte der Klemmbacke 2 hin erstrecken. Zentrisch ist auf dieser Seite an die Klemmbacke 2 ein Rastkragen 26 angeformt, der aus sechs einzelnen Federlaschen 261 gebildet ist, die endseitig eine nach außen gerichtete Rastnase 262 aufweisen. Der Außendurchmesser des Rastkragens 26 unterhalb der Rastnase 262 entspricht im Wesentlichen dem Innendurchmesser der Bohrung 111 des Gehäusebodens 11, in die die Klemmbacke 2 mit ihrem Rastkragen 26 einrastbar ist. Zwei diagonal zueinander positionierte Führungsarme 24 weisen darüber hinaus jeweils ein nach außen gerichtetes Klemmstück 27 zur Befestigung der Kugelkette 4 auf. Die beiden identisch ausgebildeten Klemmbacken 2 sind im Ausführungsbeispiel als Kunststoffspritzgussteil hergestellt.

Das Spannteil 3 ist im Wesentlichen als hohlzylindrischer Körper ausgebildet, der an zwei gegenüberliegenden Seiten abgeflacht ausgebildet ist, wodurch zwei Geradflächen 31 gebildet sind. Zwischen den beiden Geradflächen 31 weist das Spannteil 3 jeweils einen Gewindegang 32 auf, dessen Steigung der Steigung des ersten Gewindegangs 124 und des zweiten Gewindegangs 125 der Seitenteile 12 entspricht. An die Geradflächen 31 sind jeweils die zylindrische Mantelfläche des Spannteils 3 fortsetzend drei Federlaschen 33 angeformt, an die jeweils ein Gewindegang 331 angeformt ist. Zentrisch ist in dem Spannteil 3 ein Ringstück 34 angeordnet, das über zwei in Flucht befindliche erste Stege 35 sowie zwei jeweils um 90° versetzt zu den ersten Stegen 35 angeordnete zueinander fluchtende zweite Stege 36 mit dem Spannteil 3 verbunden ist. Die zweiten Stege 36 ragen dabei über die den Gewindegängen 331 der Federlaschen 33 zugewandte Oberseite des Spannteils 3 hinaus und sind beidseitig mit einer Rippenfläche 361 versehen. Die zweiten Stege 36 dienen so als Greifflächen zur Handhabung des Spannteils 3.

Eine erste Klemmbacke 2 ist derart zwischen den Seitenteilen 12 in das Gehäuse 1 eingesetzt, dass deren Führungsarme 24 in die Führungsnuten 123 der Seitenteile 12 eingreifen, wobei der Rastkragen 26 mit der Bohrung 111 des Gehäusebodens 11 verrastet ist. Die Rastnasen 262 der Federlaschen 261 des Rastkragens 26 hintergreifen dabei den durchmesserverminderten Abschnitt der als Stufenbohrung ausgeführten Bohrung 111. Die zweite Klemmbacke 2 ist wiederum mit ihren Führungsarmen 24 in die Führungsnuten 123 der beiden Seitenteile eingesetzt, derart, dass ihre Einwölbung 21 mit der Einwölbung 21 der mit dem Gehäuseboden 11 verbundenen ersten Klemmbacke 2 eine Durchführung ausbildet. Das Spannteil 3 ist mit seinen Federlaschen 33 entlang der Seitenteile 12 axial in das Gehäuse 1 eingeschoben, wobei die Federlaschen 33 über die Gewindegänge 124, 125 der Seitenteile 12 federnd entlanggleiten. In der Position, in der das Spannteil 3 auf der diesen zugewandten Klemmbacke 2 anliegt, greifen die Gewindegänge 331 der Federlaschen 33 in einen Gewindegang 124, 125 des jeweils zugewandten Seitenteils 12 ein. Dabei sind die beiden Gewindegänge 32 des Spannteils 3 frei zwischen den beiden Seitenteilen 12 positioniert. Die Vorsprünge 25 der an dem Spannteil 3 anliegenden Klemmbacke 2 liegen außen an der zylinderförmigen Mantelfläche des Spannteils 3 an. Die Kugelkette 4 ist endseitig in ein Klemmstück 27 der verschiebbaren Klemmbacke 2 eingesetzt.

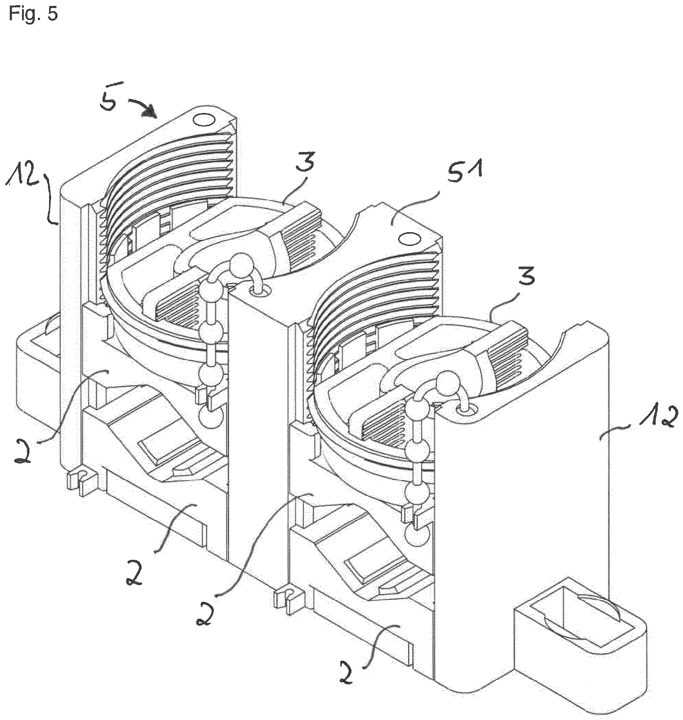

Im Ausführungsbeispiel gemäß Figur 5 sind zwei der vorstehend beschriebenen Vorrichtungen zu einer zwei Durchführungen aufweisenden Vorrichtung zusammengefasst. Hierbei ist ein Mittelteil 51 angeordnet, das zwei gegengerichtete Seitenteile zusammenfasst und an seinen beiden jeweils einem Seitenteil 12 zugewandten Seite mit einer Einformung 121 versehen ist, die wiederum durch Längsstege 122 begrenzt ist, die eine Führungsnut 123 begrenzen, wobei die Einformung 121 wie vorstehend beschrieben erste Gewindegänge 124 und zweite Gewindegänge 125 aufweist. Zur Aufnahme einer Kugelkette 4 sind in das Mittelteil 51 wiederum Bohrungen 126 angeordnet.

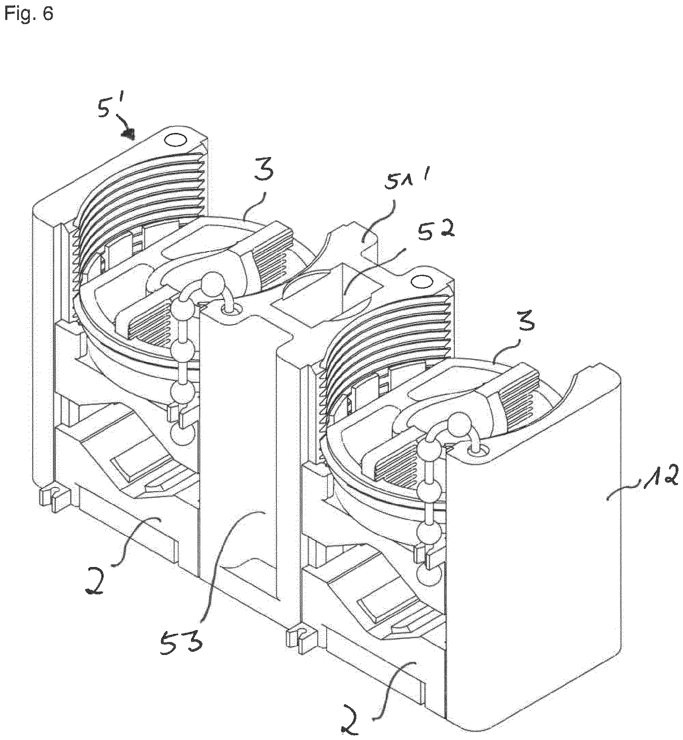

In Figur 6 ist eine erfindungsgemäße Vorrichtung in einer weiteren Ausführungsform gezeigt. Diese entspricht im Wesentlichen der Ausführungsform gemäß Figur 5, wobei das Mittelteil 51' des Gehäuses 5' mittig mit einem quaderförmigen Durchbruch 52 zur Durchführung einer Befestigungsschraube versehen ist. Hierzu ist das Mittelteil 51' entsprechend breiter dimensioniert. Zur Materialersparnis sind in den beiden Außenflächen des Mittelteils 51' Ausnehmungen 53 eingebracht.

Die vorliegende Erfindung ist nicht auf die vorstehend beschriebenen Ausführungsbeispiele beschränkt. So können analog zu den Ausführungsformen, wie sie in den Figuren 5 und 6 gezeigt sind, auch drei, vier oder mehr Vorrichtungen aneinandergereiht zu Mehrfachverbindungsvorrichtungen ausgebildet sein.

## Patentansprüche

1. Vorrichtung zur Befestigung von Leitungen, insbesondere Stromkabeln, Rohren oder Schläuchen, umfassend ein Gehäuse (1), in dem parallel zueinander zwei Klemmbacken (2) angeordnet sind, deren Klemmflächen im montierten Zustand eine Durchführung bilden, wobei wenigstens eine erste der beiden Klemmbacken (2) in dem Gehäuse (1) verschiebbar in Richtung der gegenüberliegenden Klemmbacke (2) gelagert ist und wobei in dem Gehäuse (1) ein Spannteil (3) angeordnet ist, das zumindest bereichsweise wenigstens einen Gewindegang (32) aufweist, mit dem es in ein Innengewinde des Gehäuses (1) einbringbar und gegen eine Klemmbacke (2) verspannbar ist.

2. Vorrichtung nach Anspruch 1, **dadurch gekennzeichnet, dass** das Gehäuse (1) zwei Seitenteile (12) umfasst, die mit Führungsnuten (123) versehen sind, in denen die wenigstens eine verschiebbare Klemmbacke (2) geführt ist.

3. Vorrichtung nach Anspruch 1 oder 2, **dadurch gekennzeichnet, dass** das Innengewinde durch in die beiden Seitenteile (12) an ihren zueinander gerichteten Innenseiten eingebrachte Gewindegänge (124, 125) gebildet ist.

4. Vorrichtung nach einem der vorgenannten Ansprüche, **dadurch gekennzeichnet, dass** das Spannteil (3) gegenüberliegend jeweils einen Gewindegang (32) zum Eingriff in einen Gewindegang (124, 125) eines Seitenteils (12) aufweist, wobei die beiden Gewindegänge (32) derart beabstandet angeordnet sind, dass sie in wenigstens einer Drehposition des Spannteils (3) mit den Gewindegängen (124, 125) der beiden gegenüberliegenden Seitenteile (12) außer Eingriff sind.

5. Vorrichtung nach Anspruch 4, **dadurch gekennzeichnet, dass** an das Spannteil (3) in Umfangsrichtung zwischen dessen beiden Gewindegängen (32) gegenüberliegend Federlaschen (33) angeformt sind, die jeweils einen Gewindegang (331) zum Eingriff in einen Gewindegang (124, 125) eines Seitenteils (12) aufweisen.

6. Vorrichtung nach einem der Ansprüche 3 bis 5, **dadurch gekennzeichnet, dass** in den Seitenteilen (12) ein erstes Innengewinde angeordnet ist, das eine große Steigung aufweist, wobei in beiden Seitenteilen (12) zwischen den ersten Gewindegängen (124) des ersten Innengewindes zweite Gewindegänge (125) gleicher Steigung angeordnet sind, die sich zu einem zweiten Innengewinde ergänzen.

7. Vorrichtung nach einem der vorgenannten Ansprüche, **dadurch gekennzeichnet, dass** die dem Spannteil (3) abgewandte zweite Klemmbacke (2) ortsfest in dem Gehäuse (1) gehalten ist.

8. Vorrichtung nach Anspruch 7, **dadurch gekennzeichnet, dass** an die zweite Klemmbacke (2) an ihrer dem Gehäuseboden (11) zugewandten Unterseite mehrere orthogonal an diesen angestellte Federlaschen (261) angeformt sind, die an ihrem freien Ende eine nach außen gerichtete Rastnase (262) aufweisen und durch die ein ringförmiger Rastkragen (26) gebildet ist, der in eine in dem Gehäuseboden (11) hierfür eingebrachte Bohrung (111) einrastbar ist.

9. Vorrichtung nach einem der vorgenannten Ansprüche, **dadurch gekennzeichnet, dass** das Spannteil (3) einen Eingriff zum manuellen Verdrehen des Spannteils (3) in dem Gehäuse (1) aufweist.

10. Vorrichtung nach einem der vorgenannten Ansprüche, **dadurch gekennzeichnet, dass** das Spannteil (3) über ein flexibles Sicherungsteil an dem Gehäuse (1) verliersicher gehalten ist.

11. Vorrichtung nach einem der vorgenannten Ansprüche, **dadurch gekennzeichnet, dass** die Klemmbacken (2) jeweils mit mindestens zwei parallel zueinander angeordneten Dämpfungselementen (23) versehen sind, die sich in Längsrichtung der Durchführung erstrecken und die an die Klemmbacken (22) angeformt sind oder die Bestandteil eines in die Klemmbacke (22) eingelegten Dämpfungskörpers sind.

12. Vorrichtung nach einem der vorgenannten Ansprüche, **dadurch gekennzeichnet, dass** die erste Klemmbacke (2) vier in Richtung des Spannteils (3) sich erstreckende Vorsprünge (25) aufweist, wobei das Spannteil (2) eine zylinderförmige Außenmantelfläche aufweist, an der die Vorsprünge (25) im montierten Zustand der Vorrichtung anliegen.

13. Vorrichtung nach einem der vorgenannten Ansprüche, **dadurch gekennzeichnet, dass** die Klemmbacken (2) identisch ausgebildet sind.

14. Vorrichtung nach einem der vorgenannten Ansprüche, **dadurch gekennzeichnet, dass** an das Gehäuse (1) nach außen sich erstreckende Befestigungslaschen (13) angeformt sind, die jeweils einen Durchbruch (131) zur Durchführung einer Befestigungsschraube aufweisen.
